# EUROPEAN PATENT APPLICATION

(11) **EP 4 410 103 A1**
(43) Date of publication of application: **07.08.2024**
(21) Application number: 22876410.6
(22) Date of filing: 29.09.2022
(51) Int. Cl.: A23C 19/068, A23C 19/032

(54) **METHOD FOR PRODUCING CHEESE OR CHEESE-LIKE FOODSTUFF**

(30) Priority: 01.10.2021 JP 2021162734
(71) Applicant: Fuji Oil Holdings Inc., Izumisano-shi, Osaka 598-8540 (JP)
(72) Inventor: SHIROTANI, Naoki, Izumisano-shi, Osaka 598-8540 (JP)
(74) Representative: Müller-Boré & Partner Patentanwälte PartG mbB
(86) International application number: PCT/JP2022/036331
(87) International publication number: WO 2023/054544

(57) **Abstract**

An object of the present invention is to provide a novel method for producing cheese or a cheese-like food. A method for producing cheese or a cheese-like food.

## Description

### Technical Field

The present invention relates to a method for producing cheese or a cheese-like food.

### Background Art

Non-Patent Literature 1 discloses methods for producing known blue cheeses such as Cabrales cheese, Danablu cheese, Fourme d'Ambert cheese, Fourme de Montbrison cheese, Gamonedo cheese, Roquefort cheese, and Stilton cheese.

Patent Document 1 discloses a method for producing a surface-ripened soft cheese using mildew.

### Citation List

### Non-Patent Literatures

Non-Patent Literature 1: Global Cheesemaking Technology: Cheese Quality and Characteristics, First Edition. Edited by Photis Papademas and Thomas Bintsis. 11 Blue-Veined Cheeses Maria Belen Lopez Morales, Ylva Ardo, Francoise Berthier, Kimon-Andreas G. Karatzas and Thomas Bintsis

### Patent Documents

Patent Document 1: JP 2020-5525 A

### Summary of Invention

### Technical Problem

An object of the present invention is to provide a novel method for producing cheese or a cheese-like food.

### Solution to Problem

The present invention includes the following method for producing cheese or a cheese-like food.

### Item 1.

A method for producing cheese or a cheese-like food, the method including:
(1) using at least one raw material selected from the group consisting of an animal raw material and a plant raw material;
(2) a step including (2-1), (2-2), or (2-3):
   (2-1) after the step (1), adding a Penicillium spore to the raw material, then preparing a coagulum, and then finely dividing the coagulum,
   (2-2) after the step (1), preparing a coagulum from the raw material, then adding a Penicillium spore to the coagulum, and finely dividing the Penicillium spore-added coagulum, or
   (2-3) after the step (1), preparing a coagulum from the raw material, then finely dividing the coagulum, and adding a Penicillium spore thereto; and
(3) after the step (2), further proliferating a Penicillium hypha in the coagulum and substantially coalescing the coagulum.

### Item 2.

The production method according to Item 1, wherein the step (2) includes finely dividing the coagulum into approximately two or more equal parts.

### Item 3.

The production method according to Item 1, wherein the step (2) includes finely dividing the coagulum to produce the coagulum having a surface area approximately two or more times a surface area per weight of a final product cheese or cheese-like food.

### Item 4.

The production method according to any one of Items 1 to 3, wherein the step (2) includes at least one step of finely dividing the coagulum selected from the group consisting of shredding the coagulum, dicing the coagulum, cutting the coagulum into strips, crushing the coagulum, and randomly cutting the coagulum.

### Item 5.

The production method according to any one of Items 1 to 4, wherein the step (3) includes further forming the Penicillium spore in the coagulum and substantially coalescing a portion where the Penicillium spore is formed and a portion where the Penicillium spore is not formed.

### Item 6.

The production method according to any one of Items 1 to 5, wherein the animal raw material is at least one raw material selected from the group consisting of raw milk, cow milk, buffalo milk, sheep milk, and goat milk, or at least one processed product selected from the group consisting of a hydrolysate, a powder, and a fraction thereof.

### Item 7.

The production method according to any one of Items 1 to 5, wherein the plant raw material is at least one plant raw material selected from the group consisting of a hydrolysate, an emulsion, a powder, and a fraction obtained from a raw material derived from at least one plant selected from the group consisting of beans, nuts, and grains.

### Item 8.

The production method according to any one of Items 1 to 7, wherein the Penicillium is at least one type of Penicillium selected from the group consisting of Penicillium roqueforti, Penicillium glaucum, Penicillium stilton, Penicillium gorgonzolae, and Penicillium aromaticum.

### Advantageous Effects of Invention

The present invention can provide a novel method for producing cheese or a cheese-like food.

The present invention makes it possible to produce cheese or a cheese-like food in a shorter period than known blue cheese production periods.

### Description of Embodiments

The present invention will be described in detail below.

### Method for producing cheese or cheese-like food

The method for producing cheese or a cheese-like food (cheeses) (method for producing cheeses) according to an embodiment of the present invention includes:
(1) using at least one raw material selected from the group consisting of an animal raw material and a plant raw material;
(2) including a step (2-1), (2-2), or (2-3):
   (2-1) after the step (1), adding a Penicillium spore to the raw material, then preparing a coagulum, and then finely dividing the coagulum,
   (2-2) after the step (1), preparing a coagulum from the raw material, then adding a Penicillium spore to the coagulum, and finely dividing the Penicillium spore-added coagulum, or
   (2-3) after the step (1), preparing a coagulum from the raw material, then finely dividing the coagulum, and adding a Penicillium spore thereto; and
(3) after the step (2), further proliferating a Penicillium hypha in the coagulum and substantially coalescing the coagulum.

With the production method according to an embodiment of the present invention, cheeses or cheese-like foods having different degrees of ripeness can be freely produced by increasing the surface area of the coagulum by finely dividing the coagulum, then adding a mold thereto, ripening the mold-added finely divided products for about one week, and then blending the finely divided products in any ratio to substantially coalesce (solidify) the products.

### Step (1): Using at least one raw material selected from the group consisting of animal raw material and plant raw material

The method for producing cheeses according to an embodiment of the present invention includes using a raw material such as an animal raw material or a plant raw material.

The method for producing blue cheese generally includes (a) sterilizing raw milk (62°C, 15 seconds or 72°C, 15 seconds), (b) adding rennet (coagulant), a starter (lactic acid bacterium) and Penicillium (Penicillium roqueforti), (c) obtaining curd (tofu-like solid), cutting and mixing the curd, (d) molding, (5) discharging whey from the curd (from 10 hours to 48 hours, without pressurization, pressurization leads to less cavities and difficulty in mold growth), (e) salting (applying salt water or common salt), (f) perforating, (g) ripening (10°C, 85% to 95% humidity, ripening takes about 3 months from addition of the mold depending on the type), and the like.

As the method for producing cheeses according to an embodiment of the present invention, preferably, a general method for producing blue cheese is adopted in any manner.

In the method for producing cheeses according to an embodiment of the present invention, the animal raw material is preferably at least one raw material selected from the group consisting of raw milk, cow milk, buffalo milk, sheep milk, and goat milk. In the production method according to an embodiment of the present invention, a processed product obtained by preparing a hydrolysate, a powder (whole milk powder, skim milk powder, or the like), a fraction, or the like based on an animal raw material may be used.

In the production method according to an embodiment of the present invention, a raw material derived from a plant such as bean, nut, or grain is preferably used as the plant raw material. In the production method according to an embodiment of the present invention, the plant raw material is preferably a processed product obtained by preparing a hydrolysate, an emulsion, a powder, a fraction, or the like based on a raw material derived from the plant.

In the production method according to an embodiment of the present invention, the plant raw material is preferably at least one plant raw material selected from the group consisting of a hydrolysate, an emulsion, a powder, and a fraction obtained from a raw material derived from at least one plant selected from the group consisting of beans, nuts, and grains.

In the production method according to an embodiment of the present invention, for example, soybean milk, powdered pea protein, almond milk, oat milk or the like is used as the plant raw material.

In the method for producing cheeses according to an embodiment of the present invention, preferably, a coagulum is obtained, for example, through (a) sterilizing an animal raw material (raw milk) or a plant raw material (preferably at 62°C for 15 seconds or 72°C for 15 seconds), and if necessary; (b) adding rennet (a formulation containing a milk-coagulating enzyme, a coagulant), an enzyme, a starter (for starting fermentation, for starting fermentation of milk when the animal raw material is used, a lactic acid bacterium, a liquid obtained by purely culturing a mold or the like, a powder, or the like), and an acid (lactic acid, acetic acid, citric acid, hydrochloric acid, or the like); and (c) discharging whey (milk serum) and preparing curd (tofu-like individual), or adding starch, a thickening polysaccharide or the like for gelation.

In the method for producing cheeses according to an embodiment of the present invention, preferably, the lactic acid bacterium used as the starter in blue cheese includes those that produce gas (CO₂), and the produced gas forms cavities in the tissue of the curd to form gaps into which oxygen enters, thereby enabling proliferation of molds.

In the production method according to an embodiment of the present invention, preferably, the perforation included in a general method for producing blue cheese may be employed, and the formation of gaps and sharing oxygen may be employed to enable proliferation of molds.

### Step (2): Step (2-1), (2-2), or (2-3):

(2-1) after the step (1), adding Penicillium spore to the raw material, then preparing coagulum, and then finely dividing the coagulum
(2-2) after the step (1), preparing coagulum from the raw material, and then adding Penicillium spore to the coagulum, and finely dividing the Penicillium spore-added coagulum
(2-3) after the step (1), preparing coagulum from the raw material, then finely dividing the coagulum, and adding Penicillium spore thereto

The method for producing cheeses according to an embodiment of the present invention includes, after step (1); a step (2-1) of adding a Penicillium spore to the raw material, then preparing a coagulum from the raw material to which the Penicillium spore has been added, and then finely dividing the coagulum,
a step (2-2) of preparing a coagulum from the raw material, and then adding a Penicillium spore to the coagulum, and finely dividing the coagulum to which the Penicillium spore has been added, or
a step (2-3) of preparing a coagulum from the raw material, then finely dividing the coagulum, and adding a Penicillium spore to the finely divided coagulum.

In the method for producing cheeses according to an embodiment of the present invention, for example, the coagulum is ripened, for example, through steps of (d) applying processing such as shredding to the coagulum to increase the surface area of the coagulum, (e) adding Penicillium (e.g., Penicillium roqueforti) (spore), and (f) fermenting (for about one week).

For example, the step (2-1) is a step of preparing a coagulum and then finely dividing the coagulum, and is a step of adding a Penicillium spore to the raw material, in other words, a step of adding a Penicillium spore to the raw material before preparing a coagulum.

In the step (2) of the method for producing cheeses according to an embodiment of the present invention, the step (2-1) employs a step of adding a Penicillium spore to the raw material, then preparing a coagulum, and then finely dividing the coagulum, and the step (2-3) employs a step of preparing a coagulum from the raw material, then finely dividing the coagulum, and adding a Penicillium spore thereto. These steps (2-1) and (2-3) are preferable in that the Penicillium is present over the surface and inside of the coagulum, and that the location of the Penicillium presence is not limited, and thus an efficiency of ripening is good.

The method for producing cheeses according to an embodiment of the present invention includes adding a Penicillium spore and propagating Penicillium.

In the method for producing cheeses according to an embodiment of the present invention, the Penicillium is preferably at least one type of Penicillium selected from the group consisting of Penicillium roqueforti, Penicillium glaucum, Penicillium stilton, Penicillium gorgonzolae, and Penicillium aromaticum.

In the method for producing cheeses according to an embodiment of the present invention, the step (2) preferably includes at least one step of finely dividing the coagulum selected from the group consisting of shredding the coagulum, dicing the coagulum, cutting the coagulum into strips, crushing the coagulum, and randomly cutting the coagulum.

In the method for producing cheeses according to an embodiment of the present invention, the step (2) preferably includes finely dividing the coagulum into approximately two or more equal parts.

In the method for producing cheeses according to an embodiment of the present invention, the step (2) preferably includes finely dividing the coagulum to produce the coagulum having a surface area approximately two or more times a surface area per weight of a final product cheese or cheese-like food.

### Step (3): After the step (2), further proliferating Penicillium hypha in the coagulum and substantially coalescing the coagulum

The method for producing cheeses according to an embodiment of the present invention includes, after the step (2), further proliferating a Penicillium hypha in the coagulum (white portion of blue cheese) and substantially coalescing the coagulum.

A blue portion of blue cheese exhibits a color of a Penicillium spore, indicating that Penicillium has sufficiently proliferated. The white portion of blue cheese indicates a portion where Penicillium has not sufficiently proliferated, or a portion where Penicillium has proliferated but only a hypha is present (no spore is formed).

In the method for producing cheeses according to an embodiment of the present invention, the step (3) preferably includes further forming the Penicillium spore in the coagulum and substantially coalescing a portion where the Penicillium spore is formed (Penicillium spore portion, blue portion of blue cheese) and a portion where the Penicillium spore is not formed (Penicillium hypha portion, white portion of blue cheese).

The method for producing cheeses according to an embodiment of the present invention preferably includes the steps of (g) optionally finely dividing (shredding) and substantially coalescing (blending) coagula having different degrees of ripeness, such as a ripened portion where the Penicillium propagates and a spore (blue) is formed and a portion of a Penicillium hypha (white); and (h) pressing (pressurizing) and molding the coagulum blend.

The method for producing cheeses according to an embodiment of the present invention preferably includes substantially coalescing a sporulated coagulum (blue portion) and a non-sporulated coagulum (white portion). In the production method according to an embodiment of the present invention, the sporulated coagulum preferably includes sporulated coagula having different degrees of ripeness.

In the method for producing cheeses according to an embodiment of the present invention, preferably, the coagula having different degrees of ripeness are optionally finely divided (shredded) and substantially coalesced (blended) to form spores (blue), whereby the ripened portion can be made uneven or the degree of ripeness can be adjusted.

In the method for producing cheeses according to an embodiment of the present invention, preferably, the degree of ripeness can be changed in the sporulated coagulum (blue portion) by further ripening the sporulated coagulum, for example, through raising the ripening temperature or extending the ripening period, and the taste of the coagulum depending on the degree of ripeness can be changed.

In the method for producing cheeses according to an embodiment of the present invention, preferably, the use of a sporulated coagulum having a high degree of ripeness makes it possible to exhibit a taste of a long-term ripened blue cheese though the appearance of blue cheese is substantially the same.

### Examples

Examples will be shown below, and details of the method for producing cheeses according to the present invention will be specifically described.

However, the present invention is not limited to the Examples.

Cheeses or cheese-like foods of the Examples were produced according to an embodiment of the production method including:
(1) using an animal raw material or a plant raw material;
(2) including (2-1), (2-2), or (2-3):
   after the step (1),
   (2-1) adding a Penicillium spore to the raw material, then preparing a coagulum, and then finely dividing the coagulum,
   (2-2) preparing a coagulum from the raw material, then adding a Penicillium spore to the coagulum, and finely dividing the Penicillium spore-added coagulum, or
   (2-3) preparing a coagulum from the raw material, then finely dividing the coagulum, and adding a Penicillium spore thereto; and
(3) after the step (2), further proliferating a Penicillium hypha in the coagulum and substantially coalescing the coagulum.

### (1) Example 1

### (Raw milk × step (2-1) × crushing step × ripened lightly)

### Step (1)

Raw milk (animal raw material) was heat-sterilized at 72°C for 15 seconds, a lactic acid bacterium starter, a Penicillium (Penicillium roqueforti) starter and rennet were added thereto, the mixture was reacted at 30°C for 1 hour, and whey was discharged and curd (coagulum) was obtained.

### Step (2-1)

The curd was crushed, and 30 wt.% of the finely divided coagulum was ripened at 25°C for 7 days to form Penicillium spores on the coagulum surface. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced to obtain cheese.

### (2) Example 2

### (Whole milk powder × step (2-1) × random cutting step × ripened lightly)

### Step (1)

Whole milk powder (animal raw material) (10 wt.%) was dissolved in water (90 wt.%), and heat-sterilized at 72°C for 15 seconds, a lactic acid bacterium starter, a Penicillium (Penicillium roqueforti) starter and rennet were added thereto, the mixture was reacted at 30°C for 1 hour, and whey was discharged and curd (coagulum) was obtained.

### Step (2-1)

The curd was randomly cut, and 30 wt.% of the finely divided coagulum was ripened at 25°C for 7 days to form Penicillium spores on the coagulum surface. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced to obtain cheese.

### (3) Example 3

### (Raw milk × step (2-2) × shredding step × ripened lightly)

### Step (1)

Raw milk (animal raw material) was heat-sterilized at 72°C for 15 seconds, a lactic acid bacterium starter and rennet were added thereto, the mixture was reacted at 30°C for 1 hour, and whey was discharged and curd (coagulum) was obtained.

### Step (2-1)

After addition of a Penicillium (Penicillium gorgonzolae) starter to the coagulum, the curd was shredded, and 30 wt.% of the finely divided coagulum was ripened at 25°C for 7 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced and cheese was obtained.

### (4) Example 4

### (Raw milk × step (2-3) × dicing step × ripened lightly)

### Step (1)

Raw milk (animal raw material) was heat-sterilized at 72°C for 15 seconds, a lactic acid bacterium starter and rennet were added thereto, the mixture was reacted at 30°C for 1 hour, and whey was discharged and curd (coagulum) was obtained.

### Step (2-1)

The coagulum was diced, and a Penicillium (Penicillium roqueforti) starter was added to 30 wt.% of the finely divided coagulum. The mixture was ripened at 25°C for 7 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced and cheese was obtained.

### (5) Example 5

### (Soybean milk × step (2-2) × shredding step × ripened lightly)

### Step (1)

Soybean milk (plant raw material) was heat-sterilized at 72°C for 15 seconds, a lactic acid bacterium starter was added thereto, and the mixture was reacted at 25°C for 8 hours and fermented soybean milk was obtained.

### Step (2-2)

Mixed at 50°C for 30 minutes were 40 wt.% of the obtained fermented soybean milk, 30 wt.% of coconut oil, 20 wt.% of starch, 3 wt.% of dextrin, 1.5 wt.% of common salt, and 5.5 wt.% of water. The mixture was then passed through a scraping-type heat exchanger, heat-sterilized at from 80°C to 90°C, filled, and ripened under refrigeration and a coagulum was obtained.

After addition of a Penicillium (Penicillium gorgonzolae) starter to the coagulum, the coagulum was shredded, and 30 wt.% of the finely divided coagulum was ripened at 25°C for 7 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced, and a cheese-like food was obtained.

### (6) Example 6

### (Soybean milk × step (2-3) × shredding step × ripened lightly)

### Step (1)

Soybean milk (plant raw material) was heat-sterilized at 72°C for 15 seconds, a lactic acid bacterium starter was added thereto, and the mixture was reacted at 25°C for 8 hours, and fermented soybean milk was obtained.

### Step (2-3)

Mixed at 50°C for 30 minutes were 40 wt.% of the obtained fermented soybean milk, 30 wt.% of coconut oil, 20 wt.% of starch, 3 wt.% of dextrin, 1.5 wt.% of common salt, and 5.5 wt.% of water. The mixture was then passed through a scraping-type heat exchanger, heat-sterilized at from 80°C to 90°C, filled, and ripened under refrigeration and a coagulum was obtained.

The coagulum was shredded, and a Penicillium (Penicillium roqueforti) starter was added to 30 wt.% of the finely divided coagulum. The mixture was ripened at 25°C for 7 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced, and a cheese-like food was obtained.

### (7) Example 7

### (Soybean milk × step (2-3) × shredding step × ripened deeply)

### Step (1)

Soybean milk (plant raw material) was heat-sterilized at 72°C for 15 seconds, a lactic acid bacterium starter was added thereto, and the mixture was reacted at 25°C for 8 hours, and fermented soybean milk was obtained.

### Step (2-3)

Mixed at 50°C for 30 minutes were 40 wt.% of the obtained fermented soybean milk, 30 wt.% of coconut oil, 20 wt.% of starch, 3 wt.% of dextrin, 1.5 wt.% of common salt, and 5.5 wt.% of water. The mixture was then passed through a scraping-type heat exchanger, heat-sterilized at from 80°C to 90°C, filled, and ripened under refrigeration to obtain a coagulum.

The coagulum was shredded, and a Penicillium (Penicillium roqueforti) starter was added to 30 wt.% of the finely divided coagulum. The mixture was ripened at 25°C for 14 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced, and a cheese-like food was obtained.

### (8) Example 8

### (Pea × step (2-3) × dicing step × ripened lightly)

### Step (1)

After mixing of 3 wt.% of powdered pea protein (plant raw material), 1 wt.% of glucose and 96 wt.% of water at 50°C for 30 minutes, the mixture was heat-sterilized at 72°C for 15 seconds, and a lactic acid bacterium starter was added thereto, and the mixture was reacted at 25°C for 8 hours, and a fermented liquid was obtained.

### Step (2-3)

Mixed at 50°C for 30 minutes were 40 wt.% of the obtained fermented liquid, 30 wt.% of coconut oil, 20 wt.% of starch, 3 wt.% of dextrin, 1.5 wt.% of common salt, and 5.5 wt.% of water. The mixture was then passed through a scraping-type heat exchanger, heat-sterilized at from 80°C to 90°C, filled, and ripened under refrigeration, and a coagulum was obtained.

The coagulum was diced, and a Penicillium (Penicillium roqueforti) starter was added to 30 wt.% of the finely divided coagulum. The mixture was ripened at 25°C for 7 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced, and a cheese-like food was obtained.

### (9) Example 9

### (Almond milk × step (2-3) × step of cutting into strips × ripened deeply)

### Step (1)

Almond milk (plant raw material) was heat-sterilized at 72°C for 15 seconds, a lactic acid bacterium starter was added thereto, and the mixture was reacted at 25°C for 8 hours, and a fermented liquid was obtained.

### Step (2-3)

Mixed at 50°C for 30 minutes were 40 wt.% of the obtained fermented liquid, 30 wt.% of coconut oil, 20 wt.% of starch, 3 wt.% of dextrin, 1.5 wt.% of common salt, and 5.5 wt.% of water. The mixture was then passed through a scraping-type heat exchanger, heat-sterilized at from 80°C to 90°C, filled, and ripened under refrigeration, and a coagulum was obtained.

The coagulum was cut into strips, and a Penicillium (Penicillium glaucum) starter was added to 30 wt.% of the finely divided coagulum. The mixture was ripened at 25°C for 14 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced, and a cheese-like food was obtained.

### (10) Example 10

### (Oat milk × step (2-3) × random cutting step × ripened lightly)

Oat milk (plant raw material) was heat-sterilized at 72°C for 15 seconds, a lactic acid bacterium starter was added thereto, and the mixture was reacted at 25°C for 8 hours, and a fermented liquid was obtained.

### Step (2-3)

Mixed at 50°C for 30 minutes were 40 wt.% of the obtained fermented liquid, 30 wt.% of coconut oil, 20 wt.% of starch, 3 wt.% of dextrin, 1.5 wt.% of common salt, and 5.5 wt.% of water. The mixture was then passed through a scraping-type heat exchanger, heat-sterilized at from 80°C to 90°C, filled, and ripened under refrigeration, and a coagulum was obtained.

The coagulum was randomly cut, and a Penicillium (Penicillium aromaticum) starter was added to 30 wt.% of the finely divided coagulum. The mixture was ripened at 25°C for 7 days to form blue-color Penicillium spores on the surface of the coagulum. The remaining 70 wt.% of the finely divided coagulum was stored at 5°C.

### Step (3)

After completion of the ripening, the ripened blue coagulum and the white coagulum stored at 5°C were mixed well, packed in a mold, and coalesced, and a cheese-like food was obtained.

### (11) Summary of Examples

According to the method for producing the cheeses of Examples 1 to 10, the cheeses or cheese-like foods could be produced in a shorter period, to be specific, in from about 1 week to 2 weeks, as compared with the production period of a known blue cheese (about 3 months). Due to the use of a specific process, blue cheese could be produced by controlling the degree of ripeness in a short period.

### Industrial Applicability

According to the method for producing cheeses according to the present invention, a novel cheese or cheese-like food can be produced. According to the present invention, cheeses or cheese-like foods can be produced in a shorter period, about one week, than known blue cheese production periods (about three months).

The method for producing cheeses according to the present invention can solve "food resource shortage" and "environment" issues, and can contribute to efforts toward a sustainable world. The present invention can particularly contribute to solving the shortage of foods (particularly animal protein sources) and water resources. When a plant such as soybean is used as the raw material in the present invention, a large amount of the plant can be cultivated in a wide area from a cold region to a tropical region with small amounts of a fertilizer and water as compared with an animal protein source.

The method for producing cheeses according to the present invention is a solution using a plant food material such as soybean.

When a plant such as soybean is used, the method for producing cheeses according to the present invention is a further application of soybean or the like as a food material, and can provide a novel cheese or cheese-like food using soybean or the like.

## Claims

1. A method for producing cheese or a cheese-like food, the method comprising:
(1) using at least one raw material selected from the group consisting of an animal raw material and a plant raw material;
(2) a step including (2-1), (2-2), or (2-3):
(2-1) after the step (1), adding a Penicillium spore to the raw material, then preparing a coagulum, and then finely dividing the coagulum,
(2-2) after the step (1), preparing a coagulum from the raw material, then adding a Penicillium spore to the coagulum, and finely dividing the Penicillium spore-added coagulum, or
(2-3) after the step (1), preparing a coagulum from the raw material, then finely dividing the coagulum, and adding a Penicillium spore thereto; and
(3) after the step (2), further proliferating a Penicillium hypha in the coagulum and substantially coalescing the coagulum.

2. The production method according to claim 1, wherein the step (2) comprises finely dividing the coagulum into approximately two or more equal parts.

3. The production method according to claim 1, wherein the step (2) comprises finely dividing the coagulum to produce the coagulum having a surface area approximately two or more times a surface area per weight of a final product cheese or cheese-like food.

4. The production method according to any one of claims 1 to 3, wherein the step (2) comprises at least one step of finely dividing the coagulum selected from the group consisting of shredding the coagulum, dicing the coagulum, cutting the coagulum into strips, crushing the coagulum, and randomly cutting the coagulum.

5. The production method according to any one of claims 1 to 4, wherein the step (3) comprises further forming the Penicillium spore in the coagulum and substantially coalescing a portion where the Penicillium spore is formed and a portion where the Penicillium spore is not formed.

6. The production method according to any one of claims 1 to 5, wherein the animal raw material is at least one raw material selected from the group consisting of raw milk, cow milk, buffalo milk, sheep milk, and goat milk, or at least one processed product selected from the group consisting of a hydrolysate, a powder, and a fraction thereof.

7. The production method according to any one of claims 1 to 5, wherein the plant raw material is at least one plant raw material selected from the group consisting of a hydrolysate, an emulsion, a powder, and a fraction obtained from a raw material derived from at least one plant selected from the group consisting of beans, nuts, and grains.

8. The production method according to any one of claims 1 to 7, wherein the Penicillium is at least one type of Penicillium selected from the group consisting of Penicillium roqueforti, Penicillium glaucum, Penicillium stilton, Penicillium gorgonzolae, and Penicillium aromaticum.
